# EUROPÄISCHE PATENTSCHRIFT

(11) **EP 0 803 390 B1**
(45) Veröffentlichungstag und Bekanntmachung des Hinweises auf die Patenterteilung: **15.11.2000**
(21) Anmeldenummer: 97104458.1
(22) Anmeldetag: 15.03.1997
(51) Int. Cl.: B60J 7/06

(54) **Kraftfahrzeug mit einer Dachöffnung**
Motorvehicle provided with an opening roof
Véhicule automobile avec toit ouvrant

(30) Priorität: 27.04.1996 DE 19616971
(43) Veröffentlichungstag der Anmeldung: 29.10.1997
(73) Patentinhaber: Bayerische Motoren Werke Aktiengesellschaft, 80788 München (DE)
(72) Erfinder: Clausen-Schaumann, Andreas, 82347 Bernried (DE); Minatti, Johann, 80935 München (DE)

(56) Entgegenhaltungen:
- EP-A- 0 101 322
- DE-A- 1 430 922
- DE-A- 3 902 707
- GB-A- 461 544

## Beschreibung

Die Erfindung bezieht sich auf ein Kraftfahrzeug mit einer Dachöffnung, mit den im Oberbegriff des Patentanspruchs 1 angegebenen Merkmalen.

Ein derartiges Kraftfahrzeug ist durch die gattungsgemäße DE 42 01 403 C1 bekannt, bei dem die Dachöffnung von mehreren Dachelementen verschließbar ist. Die Dachelemente können durch Rückverlagerung und Verschwenken um eine Querachse in ein hinteres Aufnahmefach eingebracht und dort kompakt angeordnet werden, wobei sich ein den Aufnahmeraum von oben begrenzender Kassettendeckel auf die erforderliche Höhenlage selbsttätig einstellt. Auf diese Weise kann ein Teil der Dachöffnung oder die gesamte Dachöffnung geöffnet werden. Der Kassettendeckel ist um eine vordere Querachse aus einer mit der Dachkontur des Kraftfahrzeugs bündigen Lage nach oben schwenkbar, wodurch sich die Auftriebs- und Widerstandskräfte im hinteren Dachbereich des Kraftfahrzeugs wesentlich verändern.

Das in der DE-OS 23 31 777 angegebene Kraftfahrzeug weist ein Schiebedach mit einem flexiblen Dachteil auf, das aufgerollt in ein Aufnahmefach im hinteren Dachbereich einzubringen ist, das eine obere Abdeckung verschließt. Das aufgerollte Dachteil kann in dem Aufnahmefach mit störenden Geräuschen verbundene Bewegungen ausführen.

In der DE 40 40 254 C1 ist ein Faltdach beschrieben, das bei einer Ausführung aufrollbar ist und aufgerollt von der Dachöffnung entfernt werden kann.

Der Erfindung liegt die Aufgabe zugrunde, ein Kraftfahrzeug mit den im Oberbegriff des Patentanspruches 1 angegebenen Merkmalen zu schaffen, bei dem eine größere Dachöffnung zu öffnen ist.

Diese Aufgabe ist durch die im Patentanspruch 1 angegebenen Merkmale gelöst. Wird der Dachquerträger zusammen mit den zu dem Dachquerträger zurückverlagerten Dachelementen von den Dachlängsholmen abgenommen und an einem beliebigen Ort gelagert, ist eine gegenüber der von den Dachelementen abdeckbaren Dachöffnung größere Öffnung im Dachbereich des Kraftfahrzeugs geöffnet, wodurch mehr Sonnenlicht und Frischluft in das Fahrzeuginnere gelangen kann. Ist außerdem die Heckscheibe des Kraftfahrzeugs schwenkbar an dem Dachquerträger angelenkt und kann separat oder zusammen mit dem Dachquerträger von dem Fahrzeug abgenommen werden oder läßt sich die Heckscheibe absenken, beispielsweise in eine Heckklappe, so kann eine bis zum unteren Ende der hinteren Fahrzeugsäulen reichende Dachöffnung freigegeben werden. Weist das Kraftfahrzeug eine um eine hintere untere Karosseriequerachse schwenkbare Heckklappe auf, die beispielsweise die Heckscheibe höhenverstellbar führt, so läßt sich die Dachöffnung durch eine Schwenkbewegung der Heckklappe nach hinten in eine etwa horizontale Beladestellung nochmals vergrößern.

Vorteilhafte Ausgestaltungen der Erfindung sind Gegenstand von Unteransprüchen.

Zwei Ausführungsbeispiele der Erfindung werden anhand einer Zeichnung näher erläutert. Es zeigen
- Figur 1: eine schräge Heckansicht auf das mit einer verschließbaren Dachöffnung versehene Kraftfahrzeug,
- Figur 2: einen vertikalen Fahrzeuglängsschnitt durch den Dachquerträger in Figur 1,
- Figur 3: eine Figur 2 entsprechende Ansicht durch den Dachquerträger eines zweiten Ausführungsbeispiels,
- Figur 4: eine Figur 1 entsprechende vereinfachte Darstellung bei von den seitlichen Dachlängsholmen abgenommenem Dachquerträger und
- Figur 5: eine Figur 1 entsprechende Darstellung bei abgenommenem Dachquerträger und nach hinten geschwenkter Heckklappe.

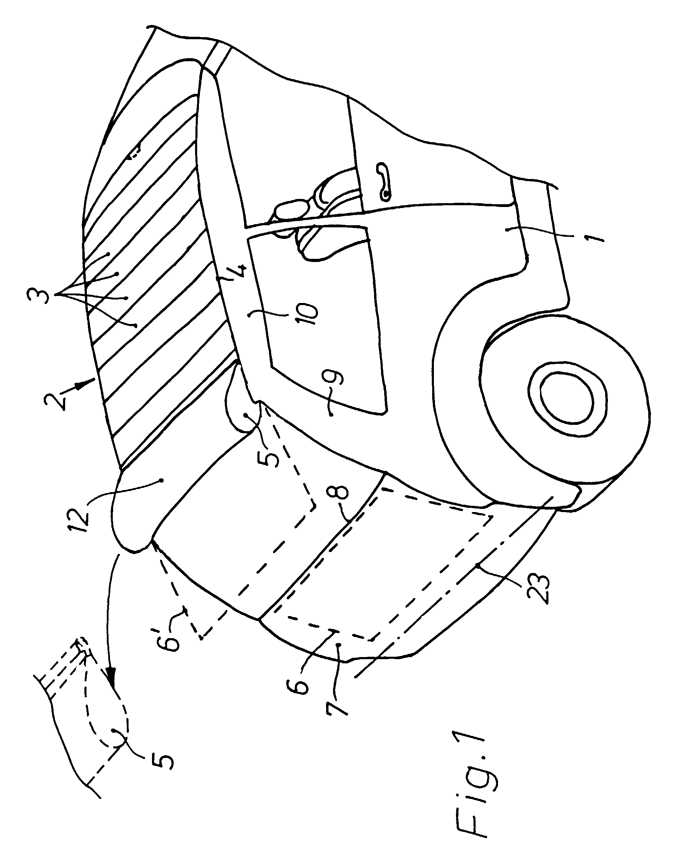

Das in Figur 1 dargestellte Kraftfahrzeug 1 weist eine Dachöffnung 2 auf, die von in Fahrzeuglängsrichtung hintereinander angeordneten Dachelementen 3 verschließbar ist. Die Dachöffnung 2 kann ganz oder teilweise geöffnet werden, indem die über eine obere Stoffhaut 4 oder dergleichen verbundenen Dachelemente 3 ganz oder teilweise nach hinten in einen Hohlraum in einem hinteren Dachspoiler 5 eingebracht werden. In dem Hohlraum des Dachspoilers 5 ist um eine Dachquerachse drehbar eine Rolle angeordnet, auf die die Dachelemente 3 aufrollbar sind. Das Kraftfahrzeug weist eine Heckscheibe 6 auf, die von einer Heckklappe 7 höhenverstellbar aufgenommen ist. Der obere Rand 8 der Heckscheibe 6 liegt in seiner Schließstellung von unten an dem Dachspoiler 5 und an seitlich gegenüberliegenden hinteren Karosseriesäulen 9 jeweils abdichtend an. Wie durch unterbrochene Umrißlinien und einem Pfeil angedeutet ist, kann der Dachspoiler 5 von den beiden seitlich gegenüberliegenden Dachlängsholmen 10 abgenommen werden, an denen der Dachquerträger 5 über nicht dargestellte lösbare Befestigungselemente zu befestigen ist. Durch die unterbrochene Umrißlinie 6' ist angedeutet, daß anstelle einer von der Heckklappe höhenverstellbaren Heckscheibe ebenso an dem Dachquerträger 5 eine Heckscheibe schwenkbar und nach hinten oben anhebbar befestigt sein kann, wobei in diesem Fall die Heckscheibe 6' an dem Dachspoiler 5 abnehmbar befestigt sein kann oder zusammen mit dem Dachspoiler 5 und den aufgerollten Dachelementen von den Dachlängsholmen abnehmbar ist.

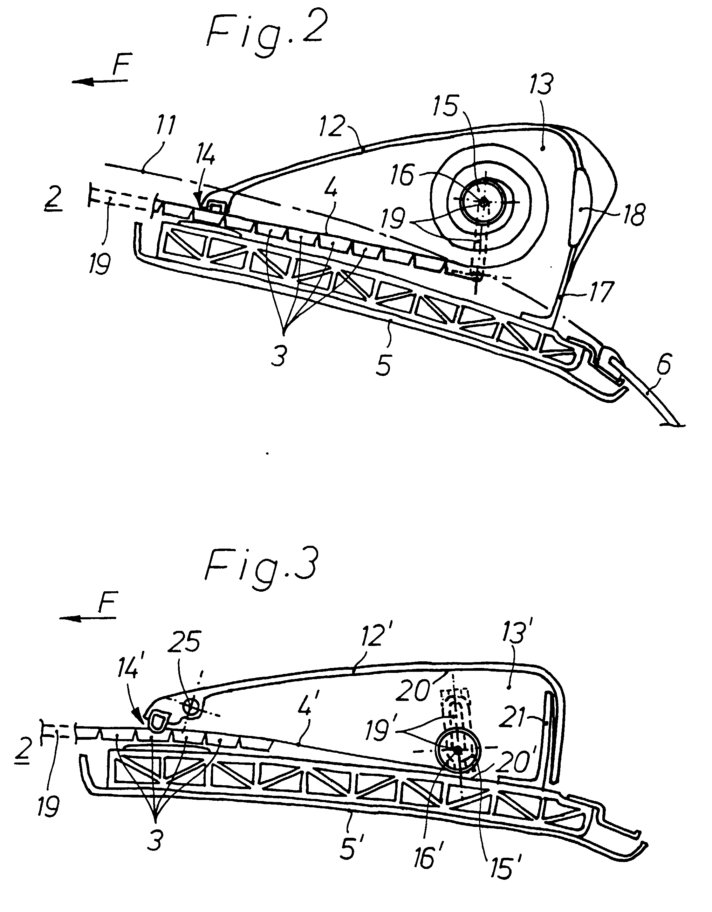

In Figur 2 ist ein vertikaler Fahrzeuglängsschnitt durch den hinteren Dachquerträger 5 dargestellt, wobei die Fahrtrichtung des Kraftfahrzeuges durch den Pfeil F angegeben ist. Wie der Figur zu entnehmen ist, bildet der die seitlichen Dachlängsholme verbindende Dachquerträger 5 an seiner Oberseite einen über die Dachkontur 11 nach oben vorstehenden Dachspoiler 12. Der Dachspoiler 12 bildet zusammen mit dem Dachquerträger 5 einen Hohlraum 13, in den über eine vordere Eintrittsöffnung 14 die Dachelemente 3 in den Hohlraum 13 einzubringen und von unterhalb der die Drehachse für die Rolle 15 bildenden Dachquerachse 16 auf die Rolle 15 aufrollbar sind. Die Rolle 15 ist im hinteren Bereich des Hohlraumes 13 angeordnet, der so bemessen ist, daß die Dachelemente 3 in einem für das Öffnen der Dachöffnung erforderlichen Maß auf die Rolle 15 aufrollbar sind. An der im Ausführungsbeispiel etwa vertikalen Rückwand 17 des Dachspoilers12 kann eine Rückleuchte 18 oder dergleichen angeordnet sein. In der dargestellten Schließstellung der Heckscheibe 6 liegt diese abdichtend an dem Dachquerträger 5 an. In der Figur ist noch angedeutet, daß die Dachelemente 3 von seitlich gegenüberliegenden Dachführungen 19 geführt sind, die jeweils in einem zugeordneten seitlichen Randbereich der Dachöffnung 2 ausgebildet sind. Die Rolle 15 ist in dem Hohlraum 13 beispielsweise über stirnseitige Zapfen-Langloch-Führungen 19 höhenverstellbar angeordnet und von einem nicht dargestellten Federelement nach unten belastet, das mit zunehmendem Aufrolldurchmesser eine Höhenverstellung der Rolle 15 zuläßt.

Das zweite Ausführungsbeispiel gemäß Figur 3 stimmt mit dem ersten Ausführungsbeispiel gemäß den Figuren 1 und 2 weitgehend überein. Zur Vermeidung einer wiederholten Beschreibung sind zwischen den beiden Ausführungsbeispielen vergleichbare Bauteile mit gleichen Bezugszahlen bzw. einer gleichen Bezugszahl und einem geänderten hochgestellten Zeichen versehen. Bei der Ausführung gemäß Figur 3 ist der Dachspoiler 12' an seinem vorderen Bereich um eine Querachse 25 an dem Dachquerträger 5' schwenkbar befestigt und an seinem hinteren Bereich von einer nicht dargestellten Rückstellfeder nach unten belastet. Die in dem Hohlraum 13' angeordnete Rolle 15' ist über stimseitige Zapfen-Langloch-Führungen 19' höhenverstellbar und von einem nicht dargestellten Federelement nach unten belastet, wobei das Langloch in einer vertikalen Seitenwand des Dachquerträgers 5' ausgebildet ist. Die beim Öffnen der Dachöffnung 2 auf die Rolle 15' aufgerollten Dachelemente 3 stützen sich an dem Dachquerträger 5' ab und heben die Rolle 15' gegenüber dem Dachquerträger 5' an. Ist eine vorgegebene Anzahl von Dachelementen 3 auf die Rolle 15' aufgerollt, so kommen die Dachelemente 3 von unten an einem Wandabschnitt 20 des Dachspoilers 12' zur Anlage und heben mit zunehmendem Aufrolldurchmesser den Dachspoiler 12' entsprechend an, wodurch dieser zunehmend in den Fahrtwind ausgestellt wird. Alternativ könnte der Zapfen der Zapfen-Langloch-Führungen 19' an dem Dachspoiler drehbar befestigt sein, wodurch die Rolle immer zusammen mit dem Dachspoiler höhenverstellt wird. Bei nach oben verstelltem Dachspoiler 12' bleibt der Hohlraum 13' über ein hinteres Wandelement 21 und seitlich von dem Wandelement 21 nach vorne gerichtete Seitenwände abgedeckt.

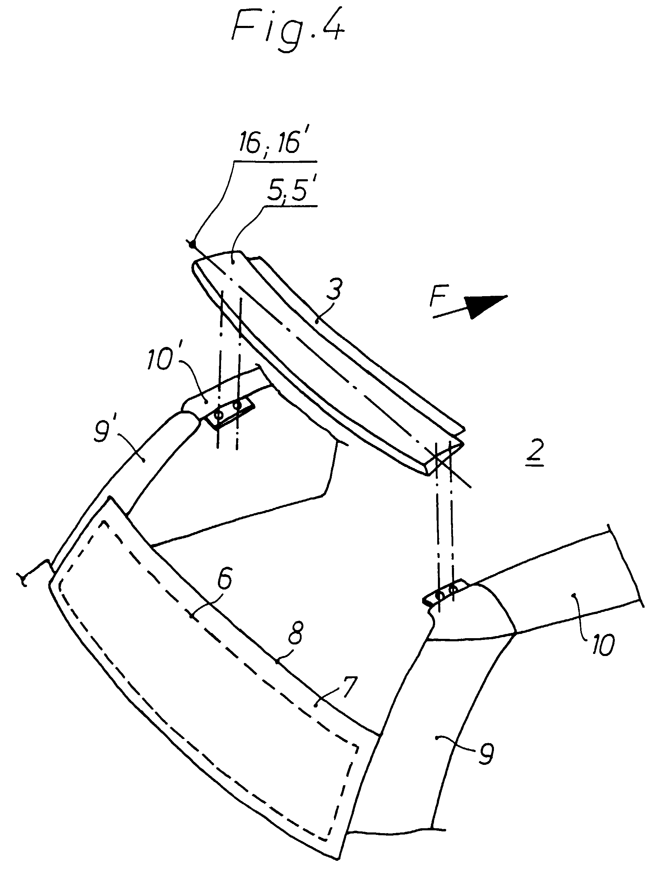

Wie der vereinfachten Darstellung gemäß Figur 4 zu entnehmen ist, kann der betreffende Dachquerträger 5 bzw. 5' zusammen mit den auf die Rolle aufgerollten Dachelementen 3 von den seitlich gegenüberliegenden Dachlängsholmen 10, 10' abgenommen und an einer beliebigen Stelle aufbewahrt werden. Ist die durch eine unterbrochene Umrißlinie dargestellte Heckscheibe 6 in die Heckklappe 7 abgesenkt, so verläuft die Dachöffnung 2 bis zur Oberkante 22 der Heckklappe 7.

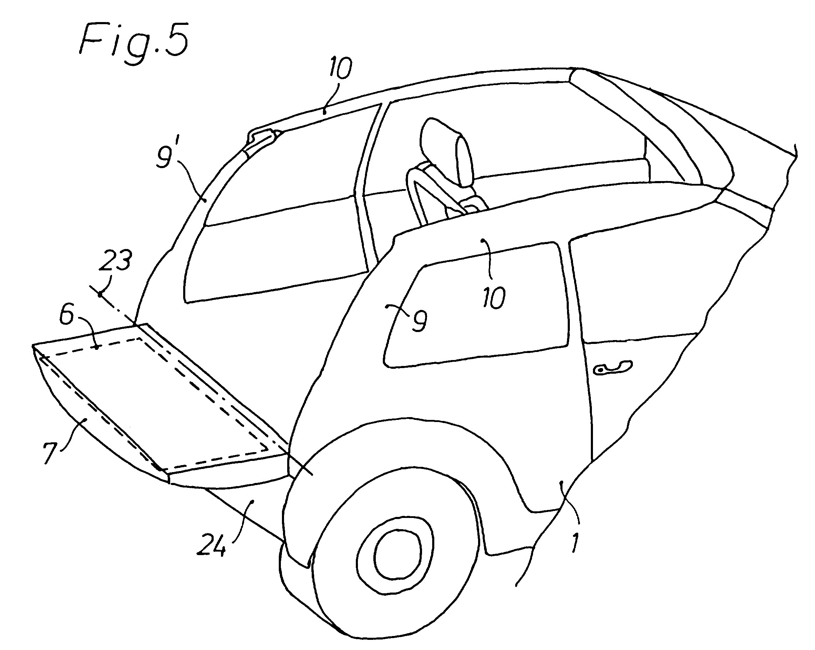

Wird darüber hinaus die um eine in Schließstellung untere Karosseriequerachse 23 schwenkbare Heckklappe 7 nach hinten in eine etwa horizontale Beladestellung gemäß Figur 5 geschwenkt, so verläuft die Dachöffnung bis zu dieser Heckklappe 7. Größere Gegenstände können in dieser Beladestellung von hinten oder von oben in den Fahrgast- bzw. Gepäckraum des Fahrzeugs eingebracht werden, wobei diese nach einer entsprechenden Befestigung am Kraftfahrzeug auch dann mitgeführt werden können, wenn diese Gegenstände über die Kontur des Kraftfahrzeugs hinaus vorstehen. In Schließstellung verläuft die Heckklappe 7 etwa bündig mit der nach vorne oben geneigten Heckscheibe 7. Befindet sich die Heckklappe 7 in der dargestellten, etwa horizontalen Beladestellung, so steht die Heckklappe 7 über die Rückwand 24 des Kraftfahrzeugs 1 hinaus nach hinten vor, wodurch sich eine größere Abstellfäche ergibt, da sich in dem Kraftfahrzeug mitgeführte Gegenstände an der Oberseite der horizontalen Heckklappe abstützen können. Die Beladestellung der Heckklappe 7 ist von einem nicht dargestellten Anschlag bzw. einerseits an der Fahrzeugkarosserie und andererseits an der Heckklappe befestigen Zugbändern bzw. Streben festgelegt.

Von den beiden Ausführungsbeispielen abweichend könnten die Dachelemente auch auf andere Weise in den Hohlraum eingebracht oder zu dem Dachquerträger zurückverlagert und dort kompakt angeordnet werden. Die konstruktive Ausführung der Bauteile und ihre Gestaltung ist dem Fachmann überlassen. Die Dachelemente können manuell oder motorisch beispielsweise über einen Antrieb verstellbar sein, der in dem Hohlraum des Dachquerträgers angeordnet ist. Die Dachelemente können auch auf andere Weise beispielsweise um Querachsen gelenkig miteinander verbunden sein. Am vorderen Rand der Dachöffnung kann ein ausstellbarer Windabweiser angeordnet sein.

## Patentansprüche

1. Kraftfahrzeug mit einer Dachöffnung (2), die von in Fahrzeuglängsrichtung hintereinander angeordneten Dachelementen (3) verschließbar ist, die bei geöffneter Dachöffnung (2) nach hinten in den Hohlraum (13) einer Dachkassette verstellt und dort kompakt untergebracht sind, die im Bereich eines hinteren Dachquerträgers (5, 5') angeordnet ist, der im hinteren Dachbereich die beiden seitlichen Dachlängsholme (10, 10') verbindet und eine äußere Dachfläche bildet, dadurch gekennzeichnet, daß die Dachkassette durch den Dachquerträger (5, 5') gebildet ist, der bei geöffneter Dachöffnung (2) zusammen mit den Dachelementen (3) von den Dachlängsholmen (10, 10') abnehmbar ist, an denen der Dachquerträger (5 bzw. 5') über lösbare Befestigungselemente zu befestigen ist.

2. Kraftfahrzeug nach Anspruch 1, dadurch gekennzeichnet, daß die Dachelemente (3) auf eine Rolle (15 bzw. 15') aufrollbar sind, die um eine Dachquerachse (16 bzw. 16') drehbar an dem Dachquerträger (5 bzw. 5') abgestützt ist.

3. Kraftfahrzeug nach Anspruch 1 oder 2, dadurch gekennzeichnet, daß der Dachquerträger (5 bzw. 5') an seiner Oberseite einen über die Dachkontur (11) nach oben vorstehenden Dachspoiler (12 bzw. 12') bildet, der einen Hohlraum (13 bzw. 13') aufweist, in den über eine vordere Eintrittsöffnung (14 bzw. 14') die Dachelemente (3) einzubringen sind.

4. Kraftfahrzeug nach Anspruch 3, dadurch gekennzeichnet, daß die Rolle (15 bzw. 15') in dem Hohlraum (13 bzw. 13') angeordnet ist und die Dachelemente (3) von seitlich im Randbereich der Dachöffnung (2) ausgebildeten Dachführungen (19) geführt von unterhalb der Dachquerachse (16 bzw. 16') auf die Rolle (15 bzw. 15') aufzurollen sind.

5. Kraftfahrzeug nach Anspruch 4, dadurch gekennzeichnet, daß die Rolle (15 bzw. 15') höhenverstellbar an dem Dachquerträger (5 bzw. 5') angeordnet und von einem Federelement nach unten belastet ist.

6. Kraftfahrzeug nach einem der Ansprüche 3 bis 5, dadurch gekennzeichnet, daß der Dachspoiler (12') an seinem vorderen Bereich um eine Querachse (25) an dem Dachquerträger (5') schwenkbar ist und eine Rückstellfeder den hinteren Bereich des Dachspoilers (12') nach unten belastet, wobei beim Öffnen der Dachöffnung (2) die auf die Rolle (15') aufgerollten Dachelemente (3) an einem Wandabschnitt (20 bzw. 20') des Dachquerträgers (5') und/oder des Dachspoilers (12') zur Anlage kommen und mit zunehmendem Aufrolldurchmesser den Dachspoiler (12') nach oben ausstellen oder nach unten einschwenken.

7. Kraftfahrzeug nach einem der Ansprüche 1 bis 6, dadurch gekennzeichnet, daß die Heckscheibe (6) des Kraftfahrzeugs (1) höhenverstellbar ist und in ihrer Schließstellung abdichtend an dem Dachquerträger (5 bzw. 5') anliegt.

8. Kraftfahrzeug nach Anspruch 7, dadurch gekennzeichnet, daß die Heckscheibe (6) von einer Heckklappe (7) höhenverstellbar aufgenommen ist.

9. Kraftfahrzeug nach einem der Ansprüche 1 bis 6 , dadurch gekennzeichnet, daß die Heckscheibe (6') des Kraftfahrzeugs (1) um eine Fahrzeugquerachse schwenkbar an dem Dachquerträger (12) befestigt ist und in ihrer Schließstellung seitlich an hinteren Karosseriesäulen (9) und mit ihrer Unterkante im oberen Bereich einer geschlossenen Heckklappe (7) jeweils abdichtend anliegt.

10. Kraftfahrzeug nach Anspruch 9, dadurch gekennzeichnet, daß die Heckscheibe (6') abnehmbar an dem Dachquerträger (12) befestigt ist.

11. Kraftfahrzeug nach einem der Ansprüche 8 bis 10, dadurch gekennzeichnet, daß die Heckklappe (7) um eine in Schließstellung untere Karosseriequerachse (23) nach hinten in eine etwa horizontale Beladestellung schwenkbar ist.

12. Kraftfahrzeug nach Anspruch 11, dadurch gekennzeichnet, daß die Heckklappe (7) in Schließstellung etwa bündig mit der Heckscheibe (6) verläuft und in der Beladestellung über die Rückwand (24) des Kraftfahrzeugs (1) hinaus nach hinten vorsteht.

## Claims

1. A motor vehicle having a roof aperture (2) closable by roof elements (3) which are disposed one behind the other in the longitudinal direction of the vehicle and which, when the roof aperture (2) is opened, are moved backwards into the cavity (13) in a roof bay and compactly housed there, the roof cavity being disposed in the neighbourhood of a rear cross-member (5, 5') of the roof which connects the two roof longitudinal members (10, 10') at the sides in the rear roof region and forms an external roof surface, characterised in that the roof bay is formed by the cross-member (5, 5') which, when the roof aperture (2) is opened, is removable together with the roof elements (3) from the longitudinal members (10, 10'), to which the cross-member (5 or 5') can be fastened by releasable fastening elements.

2. A vehicle according to claim 1, characterised in that the roof elements (3) can be rolled on to a roller (15 or 15') which is mounted on the cross-member (5 or 5') so as to be rotatable around a transverse axis (16 or 16') through the vehicle.

3. A vehicle according to claim 1 or claim 2, characterised in that the upper surface of the cross-member (5 or 5') forms a roof spoiler (12 or 12') which projects upwards over the roof contour (11) and has a cavity (13 or 13') into which the roof elements (3) can be inserted through a front entry opening (14 or 14').

4. A vehicle according to claim 3, characterised in that the roller (15 or 15') is disposed in the cavity (13 or 13') and the roof elements are guided by roof guides (19) formed at the sides in the edge region of the roof aperture (2) and can be rolled on to the roller (15 or 15') from underneath the transverse axis (16 or 16').

5. A vehicle according to claim 4, characterised in that the roller (15 or 15') is disposed in vertically adjustable manner on the cross-member (5 or 5') and is biased downwards by a spring element.

6. A vehicle according to any of claims 3 to 5, characterised in that the front region of the roof spoiler (12') is pivotable on the cross-member (5') around a transverse axis (25) and a return spring biases the rear region of the roof spoiler (12') downwards, and when the roof aperture (2) is opened the roof elements (3) rolled on the roller (15') come against a wall portion (20 or 20') of the cross-member (5') and/or the spoiler (12') and, as the diameter of the roll increases, move the roof spoiler (12') upwards or pivot it downwards.

7. A vehicle according to any of claims 1 to 6, characterised in that the rear window (6) of the vehicle (1) is vertically adjustable and in its closed position abuts sealingly against the cross-member (5 or 5').

8. A vehicle according to claim 7, characterised in that the rear window (6) is received in vertically adjustable manner by a rear flap (7).

9. A vehicle according to any of claims 1 to 6 characterised in that the rear window (6') of the vehicle (1) is fastened to the cross-member (12) so as to be pivotable around a transverse axis of the vehicle and, in its closed position, sealingly abuts columns (9) at the rear of the body and its bottom edge sealingly abuts the upper region of the rear flap (7) when closed.

10. A vehicle according to claim 9, characterised in that the rear window (6') is removably fastened to the cross-member (12).

11. A vehicle according to any of claims 8 to 10, characterised in that the rear flap (7) is pivotable downwards into an approximately horizontal loading position around a transverse axis (23) of the body at the bottom in the closed position.

12. A vehicle according to claim 11, characterised in that the rear flap (7) when closed extends approximately flush with the rear window (6) and when in the loaded position projects backwards over the rear wall (24) of the vehicle (1).

## Revendications

1. Véhicule automobile comportant une ouverture de toit (2) qui peut être obturée par des éléments de toit (3), disposés les uns derrière les autres par rapport à la direction de déplacement du véhicule et qui, lorsque l'ouverture de toit (2) est découverte, sont reculés à l'intérieur du volume creux (13) d'un caisson de toit où ils sont disposés d'une manière compacte, ce caisson étant situé près d'une traverse arrière de toit (5, 5') qui, vers l'arrière de toit, relie les deux longerons latéraux de toit (10, 10') et forme une surface externe de toit,
caractérisé en ce que
le caisson de toit est constitué par la traverse de toit (5, 5') qui, lorsque l'ouverture de toit (2) est découverte, peut avec les éléments de toit (3) être détachée des longerons (10, 10'), auxquels cette traverse (5, 5') est fixée par des éléments de fixation amovibles.

2. Véhicule automobile selon la revendication 1,
caractérisé en ce que
les éléments de toit (3) peuvent être enroulés sur un rouleau (15 ou 15') qui s'appuie sur la traverse de toit (5 ou 5'), avec rotation autour d'un axe transversal (16 ou 16').

3. Véhicule automobile selon la revendication 1 ou 2,
caractérisé en ce que
la traverse de toit (5 ou 5') forme, sur sa face supérieure, un spoiler (12 ou 12') faisant saillie vers le haut au-dessus du contour de toit (11) et délimitant un volume creux (13 ou 13'), dans lequel peuvent s'introduire les éléments de toit (3) à travers une ouverture d'entrée (14 ou 14') située en avant.

4. Véhicule automobile selon la revendication 3,
caractérisé en ce que
le rouleau (15 ou 15') est monté à l'intérieur du volume creux (13 ou 13') et les éléments de toit (3) guidés par des guides de toit (19) situés le long des bords latéraux de l'ouverture de toit (2) peuvent venir s'enrouler sur le rouleau (15 ou 15') par-dessous l'axe transversal de toit (16 ou 16').

5. Véhicule automobile selon la revendication 4,
caractérisé en ce que
le rouleau (15 ou 15') est monté mobile en hauteur sur la traverse de toit (5 ou 5') et est soumis à l'action, dirigée vers le bas, d'un élément élastique.

6. Véhicule automobile selon une des revendications 3 à 5,
caractérisé en ce que
le spoiler (12'), le long de sa partie avant, peut basculer sur la traverse de toit (5') autour d'un axe transversal (25), tandis qu'un ressort de rappel sollicite vers le bas la partie arrière du spoiler (12'), et lorsqu'on découvre l'ouverture de toit (2), les éléments de toit (3) enroulés sur le rouleau (15') viennent en contact avec une partie de paroi (20 ou 20') de la traverse (5') et/ou du spoiler (12') de sorte qu'ils soulèvent le spoiler (12') vers le haut, quand le diamètre d'enroulement croît, ou basculent vers le bas.

7. Véhicule automobile selon une des revendications 1 à 6,
caractérisé en ce que
la vitre arrière (6) du véhicule (1) est mobile en hauteur et, en position de fermeture, s'applique de manière étanche sur la traverse de toit (5 ou 5').

8. Véhicule automobile selon la revendication 7,
caractérisé en ce que
la vitre arrière (6) est logée, avec mobilité en hauteur, dans un abattant arrière (7).

9. Véhicule automobile selon une des revendications 1 à 6,
caractérisé en ce que
la vitre arrière (6') du véhicule automobile (1) est montée sur la traverse (12) de manière à pivoter autour d'un axe transversal du véhicule et, dans sa position de fermeture, elle s'applique de manière étanche, latéralement sur les pieds-droits arrière (9) de la carrosserie et, par son bord inférieur, sur la partie supérieure d'un abattant (7) fermé.

10. Véhicule automobile selon la revendication 9,
caractérisé en ce que
la vitre arrière (6') est fixée de manière amovible sur la traverse de toit (12).

11. Véhicule automobile selon l'une quelconque des revendications 8 à 10,
caractérisé en ce que
l'abattant (7), en position de fermeture, peut, autour d'un axe transversal (23) situé vers le bas de la carrosserie, basculer vers l'arrière pour venir prendre une position de chargement à peu près horizontale.

12. Véhicule automobile selon la revendication 11,
caractérisé en ce que
l'abattant (7), en position de fermeture, est sensiblement à fleur de la vitre arrière (6) et, en position de chargement, il dépasse vers l'arrière la paroi arrière (24) du véhicule (1).
